# EUROPEAN PATENT APPLICATION

(11) **EP 2 570 453 A1**
(43) Date of publication of application: **20.03.2013**
(21) Application number: 11007485.3
(22) Date of filing: 14.09.2011
(51) Int. Cl.: C08J 7/12

(54) **Antimicrobial polymeric substrates**

(71) Applicant: Center of Excellence Polymer Materials and Technologies (Polimat), 1000 Lubljana (SI)
(72) Inventor: Stana-Kleinschek, Karin, 2000 Maribor (SI); Maver, Tina, 1000 Ljubljana (SI); Maver, Uros, 1000 Ljubljana (SI); Kralj Kuncic, Marjetka, 4275 Begunje na Gorenjskem (SI); Cerlini, Jasna, 1000 Ljubljana (SI)
(74) Representative: Schmidt, Karsten

(57) **Abstract**

The invention relates to coated polymeric substrates, and to their use as antimicrobial agents. The invention also relates to methods of producing antimicrobial polymeric substrates by plasma polymerization. Antimicrobial polymeric substrates of the invention can be applied in medical products, such as wound dressings, band-aids or antimicrobial textiles.

## Description

### FIELD OF THE INVENTION

The present invention relates to coated polymeric substrates, and to their use as an antimicrobial agent. The present invention also relates to methods of producing antimicrobial polymeric substrates by plasma polymerization. Antimicrobial polymeric substrates of the invention are preferably applied in medical products, such as wound dressings, band-aids or antimicrobial textiles.

### BACKGROUND OF THE INVENTION

Conventional wound treatment is based on the presumption that dry wounds should be treated with dry dressings and moist wounds with impregnated dressings using absorbent dressing pads and gauze. The gauze, which is either dry or impregnated with a physiological solution, and the discharge can dry on the wound. This can cause the gauze fibers to stick to the tissue, which can lead to pain while dressing the wound or even further tissue damage. The wound can also be contaminated by fibrous residue or other small pieces of materials, which can cause additional inflammation. Due to their high permeability to discharge, gases and bacteria, gauzes cannot prevent environmental infections for a longer period of time.

If the wound is left untreated or is treated poorly, it dries and cools quickly, which reduces the cell and enzyme function and consequently leads to delayed healing. In the past medical textiles enriched with antibiotics were often used to treat wounds due to the false belief that this could prevent infection. After several years of research and many unsatisfied patients it was clear that local use of antibiotics can quickly lead to the development of antibiotic resistance in bacteria, which can drastically reduce the success of treatment and also lead to more severe infections that are much more difficult to treat. Last but not least, such treatment also takes a long time and is a burden for the patient since it is painful and carries the possibility of additional infection and protracted absence from work.

As a possible solution to the problem of antibiotic addition and the permeability of the material, the possibility of individual layer modification that form an integral part of medical textiles has been discussed and extensively researched in the last decade. A wide variety of dressings is available that differ in their physical and chemical composition as well as appearance. The realization of the importance of moisture in wound treatment has been an important achievement in the field of medical dressings. Absorbent dressing pads and gauzes are being replaced with new natural, synthetic and semi-synthetic biomaterials that are able to maintain the appropriate moisture inside and on the wound while absorbing the excessive discharge from the wound due to their physical, chemical and technological treatment. In addition to dressings that can maintain moisture, dressings that enable active intervention into biochemical processes on the wound and thus facilitate healing are also being developed. These dressings can provide a satisfactory anti-microbial effect, which is one of the key tasks of a dressing in ensuring effective healing. The latter is very important in light of recent demands from medical practitioners to decrease the pain connected with frequent dressing changing and to lower costs, as dictated by current economic trends.

There are many compounds that show anti-microbial properties and can be used for the functionalization of polymer surfaces. However, many of them are not completely safe for human and their efficiency is greatly diminished during their incorporation.

One of the most important tasks of the dressing is to protect against microorganisms entering the wound from the external environment. Conventional dressings provide only moderate protection against this and by absorbing the discharge from the wound often create an environment that is favorable to the development of microorganisms. Such dressings are therefore unsuitable for infected wounds or infection-prone wounds. The development of new dressings is thus based either on bioactive polymers or on the inclusion of potential antimicrobial compounds in the dressing (not antibiotics). Antimicrobial dressings can be made by chemically modifying polymers or by binding a drug onto the polymer.

Antimicrobial properties can be achieved in polymers by introducing various functional groups, such as quaternary amino groups (WO 2010/036465), amino acids (WO 2009/081152), and nitrogen groups (WO 1998/018326).

Plasma polymerization is a well-known process for the modification of polymeric surfaces [H. K. Yasuda, Plasma Polymerization, Academic Press, London 1985]. It is known that organic compounds (monomers) alone or in combination with other gases, e.g., argon and/or helium, polymerize in plasma reactors, whereby surfaces in contact with the plasma are coated with the polymerization product. Plasma polymerization is known as an effective method for the solvent-free generation of thin layers of a polymerized material (<5 nm). Functional groups can be introduced in polymers by using monomers containing functional groups or by adding a suitable gas during polymerization. For example, amino groups can be introduced, according to the present invention, by adding NH₃ to the plasma mixture, or by adding nitrogen gas, or nitrogen and a hydrogen containing gas.

Plasma polymerization is the polymerization of monomers in plasma. Plasma polymerization is sometimes also referred to as glow discharge polymerization. This is due to the most common method of generating plasma, i.e., by glow discharge. The most important reactions during plasma polymerization are fragmentation of monomer molecules, the formation of active sites and recombination of activated molecules. After the recombination of molecules, ions and excited species, the larger molecules precipitate from plasma to the surface inside the reactor including the reactor wall. Molecules usually join in gaseous state and precipitate as spheres with diameters of hundreds of nanometers. After the precipitation the polymer is subject to etching and reactions caused by plasma and UV and visible radiation produced by plasma. The monomer used in plasma polymerization does not have the same meaning as in classical polymerization reaction. Practically every organic gas may be polymerized in a plasma in one single process.

Polyethylene terephthalate (PET) is widely used for the manufacture of plastic packaging and textile fibers; however its use for medical purposes is less common. The use of plasma polymerization for the surface modification of PET material is known to improve its mechanical, optical and adhesive properties. PET layers in multi-layered products with antimicrobial properties are used in agriculture, the food industry, packaging and protective clothing. In the field of medical applications, such as wound dressings, plasma coated PET materials have not been used.

The synthesis of antimicrobial coatings through the plasma polymerization of ammonia and acetylene in a radio-frequency plasma reactor at 13.5 MHz has been described [Hegemann et al., Progress in Organic Coatings 58 (2007) 237-240]. In one experiment, plasma coating was applied to PET foils. An antimicrobial effect of the plasma polymerization was reported. However, the reported antimicrobial effect was attributed to co-sputtering of silver nano-particles in the plasma polymerization process. The antimicrobial effect of the nitrogen functional groups alone remains un-recognized by the authors.

In the development of innovative sanitary materials and medical textiles suitable for efficient healing of infected wounds, the trend is textile surface functionalization with the purpose of developing antimicrobial properties. Most functionalization methods still use reagents that are harmful to humans and to the environment. Dressings with antimicrobial effects can be produced through the chemical modification of polymers or by introducing functional groups to polymers.

The incorporation of functional groups with antimicrobial properties using plasma polymerization has several advantages compared to conventional polymerization reactions:
- Polymer layers can be prepared from almost any organic material that can occur in gaseous form, even from those from which polymers cannot be produced using conventional processes;
- Polymers prepared with plasma polymerization are highly cross-linked;
- Polymers prepared with plasma polymerization exhibit high temperature stability;
- Very thin layers (1-10 nm) can be prepared on the chosen material;
- The layers adhere well to most technically interesting materials.
- Simplified treatment; unlike conventional polymerization that requires several stages/treatment steps, plasma polymerization is a monophasic treatment;
- It is a cleaner and more environmentally friendly type of treatment that does not include the use of solutions in the preparation of polymers nor the subsequent "cleaning" of modified substrates;
- The initiator for polymer activation does not have to be added in the plasma polymerization process since this is done by the electrodes; and
- The polymer film deposition on the treated substrate is very compact, does not contain pores, and the film thickness can vary.
- The composition of the polymer film deposition can vary with depth.

In view of the above mentioned prior art, it is an object of the invention to provide improved methods and materials that can be used as an antimicrobial agent in medical products, such as wound dressings.

### SUMMARY OF THE INVENTION

The present invention generally relates to the application of plasma polymerization for the production of antimicrobial polymeric layers on polymeric substrates. The coating of the polymeric substrates makes these substrates a valuable component of medical products such as wound dressings, band-aids, feminine hygiene articles, diapers and the like.

The present invention hence relates to the use of plasma polymerization for increasing the antimicrobial properties of polymer materials. The invention provides a method for producing thin films of antimicrobial material on the polymer layers; the thin films being stable over a period of several years. The invention offers the use of simple reagents - gases, preferably an alkane and ammonia, more preferably hexane and ammonia. Ammonia can be replaced with nitrogen and/or a nitrogen and hydrogen mixture or any other gas containing nitrogen and hydrogen, such as hydrazine. Any hydrocarbon which is gaseous at the temperature and pressure of the plasma polymerization can be used as a carbon source. A preferred hydrocarbon, in accordance with present invention, is hexane. Other alkanes, e.g., saturated and/or unsaturated alkanes, such as C1 to C12 alkanes, or C1-C8 alkanes, most preferred C6 alkanes, or acetylene, can be used. In one embodiment the plasma polymerization is performed using only a single gas species that is a molecular species comprising at least three elements: carbon, hydrogen and nitrogen. Preferred examples of such gas species are amino methane (CH₃NH₂), and other amino alkanes.

In accordance with the present invention, the polymerization process preferably takes place in a closed plasma reactor and all by-products are collected, e.g., in cold traps. This makes processes according to the invention more environmentally friendly. Processes of the invention preferably take place at a reduced pressure; however, the inventive plasma polymerization can also take place at atmospheric pressure. The invention is not limited by a certain type of energy source to generate and maintain the plasma. In a preferred embodiment, however, the plasma is produced by means of a radio-frequency generator coupled to an electromagnetic coil.

Without wishing to be bound by theory, the antimicrobial activity of the described plasma polymers in medical dressings is based on amino groups that are incorporated in the polymer. Namely, amino groups are produced by polymerization of plasma species that contain carbon, hydrogen and nitrogen. The invention also covers the utilization of other functional groups for obtaining antimicrobial effects, as long as the polymeric product is produced by plasma polymerization. Suitable functional groups include amino, carbonyl, sulfone, and carboxyl groups. Gases that would be suitable for plasma polymerization purposes for the preparation of an antimicrobial surface with other functional groups are combinations of gases containing nitrogen and oxygen or nitrogen oxides and sulfur oxides for the sulfone group.

The present invention is based on the principle that in multilayered medical dressings, those layers which are in direct or indirect contact with a wound should preferably bind microbes, which are thereby removed from the wound. The growth and formation of colonies after microbes are bonded to the layer are restricted but this is not decisive, since the medical dressing is disposable and will be exchanged regularly. Modification of the surface of layers of wound dressings for increasing the bonding ability is thus an important aspect of the present invention. Such surfaces are provided, in accordance with the present invention, by plasma polymerization, during which a polymeric coating comprising a large number of amino groups at its surface is produced.

In preferred embodiments of the invention, plasma polymerization occurs with plasma generated from ammonia and hexane gas. Argon and/or helium gas may be added to sustain the plasma. In certain preferred embodiments, the gas comprising carbon, hydrogen and nitrogen does not include elements other than carbon, hydrogen, nitrogen, sulfur, and oxygen.

The polymerized reaction product is preferably coated onto the surface of a polyethylene terephthalate (PET) substrate, preferably in the shape of a mesh. Polymer meshes having nitrogen functional groups on their surface have been shown by the present inventors to have an antimicrobial activity with respect to the most commonly found bacteria in wounds (Example 2).

The process of the current invention can be used to produce a layer of polymeric material (an intermediate product) that can be included in multilayered dressings. It can be included in many existing dressings, but it is particularly advantageous to apply the layer to newly developed dressings as a layer that can be in direct contact with the skin due to its inertness and antimicrobial activity.

For this purpose a plasma polymerization technique using argon, ammonia and hexane gases was introduced to make a polymer coating on the surface of a polyethylene terephthalate mesh (PET) that contains nitrogen functional groups in order to achieve an antimicrobial activity. The antimicrobial activity, in accordance with the present invention, can also lie in the sequestration of microbes from a liquid environment.

The process of the present invention preferably allows control of the composition of the gas mixture being used for the plasma polymerization. Thereby the coverage of the surface with amino groups can be controlled, and consequently an antimicrobial activity on the surface of the dressing, or one of its layers, can be achieved. Such layers can be included in several existing dressings but particularly apply to newly developed dressings as layers that can be in direct contact with the skin due to their inertness and antimicrobial effect. The latter is particularly important in order to avoid possible hypersensitivity reactions.

Compared to a large number of antimicrobial compounds that are used for the functionalization of polymer surfaces, this is a new process in the field of applications for medical purposes that also ensure human as well as environmental safety.

The methods of the present invention can be used to produce an individual layer (an intermediate product) of a multilayered wound dressing. The inventive method leads to the production of a universal layer (intermediate product) for multilayered medical dressings that can be included in many existing dressings, but particularly applies to newly developed dressings as a layer that can be in direct contact with the skin due to its inertness and antimicrobial effect. Such dressings are effective in treating acute wounds, i.e. traumatic (scratches, abrasions, cuts, lacerations etc.) and burn wounds.

### BRIEF DESCRIPTION OF THE DRAWINGS

Figure 1 shows a plasma polymerization reactor setup according to the invention.
Figure 2 shows the results of a spectrometric analysis, according to the invention.

### DETAILED DESCRIPTION OF THE INVENTION

A "polymeric substrate", in accordance with the present invention, shall be understood as being any solid piece of polymeric material. The polymeric substrate can be a film, and mesh, a fabric, woven or nonwoven fibrous material. Preferred polymeric substrates of the invention comprise, or consist of, polymeric materials, such as polyethylene terephthalate (PET), polyurethane (PU), polypropylene (PP), polyvinyl chloride (PVC), polyamide (PA) or a polyolefin.

A "polymeric material", according to the invention, is being any polymeric substance comprising carbon, nitrogen, and hydrogen atoms. Preferred polymeric materials, according to the invention, have an increased amount of nitrogen functional groups, such as amine groups.

A "hydrocarbon", or a "hydrocarbon compound", according to the present invention, shall be understood as being a compound consisting entirely of carbon atoms and hydrogen atoms. The expression "hydrocarbon", unless otherwise stated, shall include both saturated and un-saturated hydrocarbon species. Mixtures of hydrocarbons are also embraced.

A "nitrogen functional groups", according to the invention, is any functional group comprising nitrogen. Preferred nitrogen functional groups are primary, secondary or tertiary amine groups, preferably primary amine groups.

A "plasma polymerization", according to the invention, shall be understood as being the process of producing a polymer from plasma generated from gas by the application of static or alternating electric or electromagnetic fields, e.g., low frequency fields (<3 kHz), radio-frequency fields (3 kHz - 300 MHz)and micro-frequency fields (micro-wave fields, 0.3 GHz to 200 GHz), under appropriate conditions to produce plasma from the gas. The expression "plasma polymerization", hence, shall assume its ordinary meaning understood by a person skilled in this field.

"%(wt)" shall be understood to refer to weight-percent.

Plasma polymerization normally takes place in the plasma reactor. One type of reactor is an electrodeless and comprises a radio frequency (RF) coil, which then uses a radio frequency generator to form the plasma inside of the reactor without the use of electrical electrodes. A polymer formed from the plasma can then be deposited on an object of choice as it is pushed through the RF coil toward one end of the apparatus. This is desirable when polymerizing onto other surfaces [Yasuda, H.; Lamaze, C. E. (1971). "Polymerization of styrene in an electrodeless glow discharge". Journal of Applied Polymer Science 15 (9): 2277-2292]. The rate of plasma polymerization depends on monomer flow rate, system pressure and the applied electrical power/field strength among other variable parameters such as the geometry of the system, the reactivity of the starting monomer, the frequency of the excitation signal and the temperature of the substrate. Various plasma polymer deposition methods such as DC, AF-magnetron and RF are discussed by Yasuda et al. [*ibid.*].

The present invention relates to a coated polymeric substrate for use as an antimicrobial agent, said coated polymeric substrate being coated with a layer of a polymer material produced by plasma polymerization from gas comprising at least carbon atoms, hydrogen atoms and nitrogen atoms; wherein said layer of a polymer material contains less than 0.1%(wt), preferably less than 0.01 %(wt), more preferably 0.001%(wt), yet more preferably 0.0001 %(wt), most preferably 0.00001%(wt) of silver, based on the total weight of said layer.

In an alternative embodiment, the present invention relates to a coated polymeric substrate for use as an antimicrobial agent, said coated polymeric substrate being coated with a layer of a polymer material produced by plasma polymerization from gas comprising at least carbon atoms, hydrogen atoms and nitrogen atoms; wherein said layer of a polymer material contains less than 0.1%(wt), preferably less than 0.01 %(wt), more preferably 0.001%(wt), or 0.0001 %(wt), most preferably 0.00001%(wt) of any one of the antimicrobial elements in the group of elements consisting of: zinc, molybdenum, cadmium, titanium, vanadium, chromium, manganese, iron cobalt, nickel, copper, silver, platinum, gold, mercury, aluminum, gallium, tin, lead, iodine, bromine and chloride, based on the total weight of said layer.

In yet an alternative embodiment, the present invention relates to a coated polymeric substrate for use as an antimicrobial agent, said coated polymeric substrate being coated with a layer of a polymer material produced by plasma polymerization from gas comprising at least carbon atoms, hydrogen atoms and nitrogen atoms; characterized in that the total number (or amount) of carbon atoms, hydrogen atoms, sulfur atoms, phosphorous atoms, oxygen atoms and nitrogen atoms in said layer of a polymer material is at least 99% (or 99.9%, 99.99%, 99.999%, or 99.9999%) of the total number of atoms of said layer.

Hence, the layer of a polymeric material consists essentially of carbon, hydrogen, oxygen and nitrogen atoms. Other atomic species, in particular silver atoms (which have previously been included as an anti-microbial agent in substrate coatings), are substantially absent from the layer of polymeric material. It is seen as one distinct advantage of the present invention that no co-sputtering of metals, such as silver, is required to achieve the antimicrobial effect.

It shall be understood that an antimicrobial agent, according to the invention, may exert its antimicrobial effect by binding microbes to its surface, thereby sequestering the microbes from the treated wound or area.

Another aspect of the present invention relates to the use of coated polymeric substrates of the invention as an antimicrobial agent.

Preferred nitrogen functional groups, in accordance with the present invention, are primary, secondary, or ternary amino groups. Most preferred primary amino groups.

In a preferred embodiment, said gas comprising carbon, hydrogen and nitrogen atoms comprises a gas (or is) selected from the group consisting of: a mixture of ammonia and a hydrocarbon compound; a mixture of hydrazine and a hydrocarbon compound; amino methane; a mixture of ammonia and C1-C8 alkane; a mixture of ammonia and hexane; mixtures of nitrogen gas (N2) and a hydrocarbon compound; and mixtures of nitrogen gas (N₂), hydrogen gas (H₂) and a hydrocarbon compound. A mixture of ammonia and hexane is preferred. It shall be understood that any hydrocarbon compound having a vapor pressure high enough to be fed into plasma reactor at room or elevated temperatures as a vapor can be used as a source of carbon atoms, according to the invention.

In another preferred embodiment, said gas comprising carbon, hydrogen and nitrogen comprises at least one molecular species comprising nitrogen, hydrogen and carbon atoms. Hence, this gas comprises all of nitrogen, hydrogen and carbon atoms in one molecule.

In a particularly preferred embodiment, the gas used for plasma polymerization comprises only a single molecular species. This single molecular species then contains all atoms required for the polymerization reaction. No mixing of different gases is required.

In another preferred embodiment, the gas comprising carbon, hydrogen and nitrogen atoms further comprises argon and/or helium atoms, e.g., by addition of argon and/or helium gas.

Preferably, said layer of a polymer material has a thickness of 1 nm to 10 µm, more preferably 1 nm to 1 µm, most preferably 1 nm to 100 nm.

In a preferred embodiment, said polymeric substrate is a polymeric mesh, a polymeric film, or a woven or nonwoven fibrous layer. Most preferred, however, is a polymeric mesh.

Preferably, the coated polymeric substrate comprises PET, polyolefin, polypropylene, or polyurethane, preferably PET. Alternatively, the coated polymeric substrate consists of PET, polyolefin, polypropylene, or polyurethane, preferably PET. The polymeric substrates are envisaged.

In a preferred embodiment, said plasma polymerization is effected by application of a radio frequency electromagnetic field. Hence, plasma polymerization preferably takes place in a reactor comprising a radio-frequency generator coupled to a coil.

In accordance with one aspect of the present invention, plasma polymerization takes place at a pressure of from 0.01 to 5 mbar, preferably 0.1 to 3 mbar, most preferably at 0.2 to 1 mbar. Plasma polymerization at atmospheric pressure, however, is also envisaged.

The present invention is also related to an antimicrobial product comprising an antimicrobial agent, wherein said antimicrobial agent is a polymeric substrate according to the invention.

Preferably, the antimicrobial product is a multilayered product, and said coated polymeric substrate serves as a layer in said multilayered product.

In another preferred embodiment, the coated polymeric substrate, during use, is in direct contact with the skin of a patient or of a wearer.

In another preferred embodiment, the antimicrobial product is a wound dressing, a band-aid, a feminine hygiene article, or a diaper.

The present invention also relates to a method of increasing the antimicrobial activity of a polymeric substrate comprising coating said substrate with a layer of a polymer material, said polymer material comprising nitrogen functional groups, wherein said coating is effected by plasma polymerization according to the present invention.

The increase of the antimicrobial activity, according to the invention, is preferably quantified by the ASTM E2149-10 (Standard Test Method for Determining the Antimicrobial Activity of Immobilized Antimicrobial Agents Under Dynamic Contact Conditions).

### EXAMPLE 1

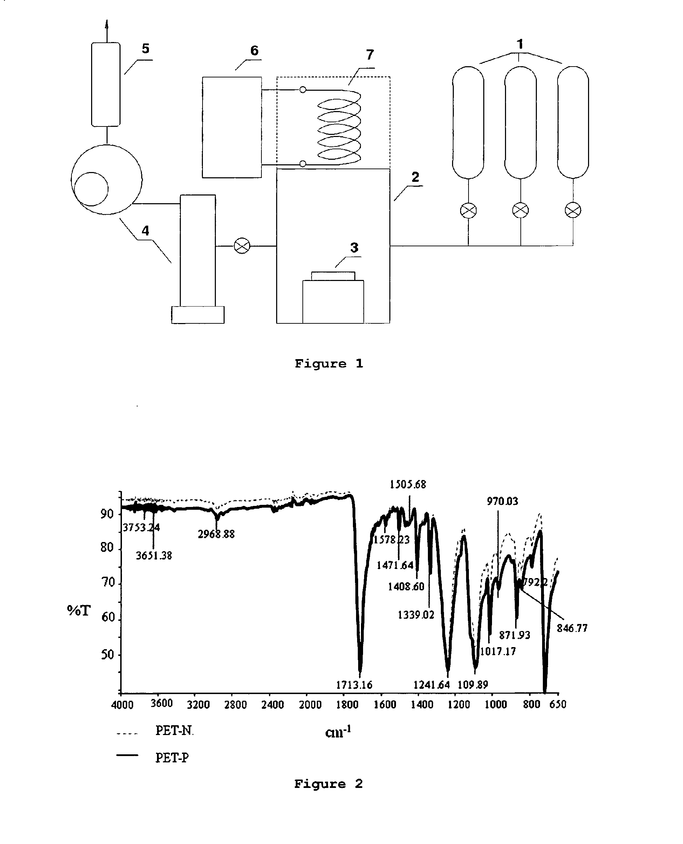

Surface modification of the PET mesh by plasma polymerization was performed in a plasma reactor shown in Figure 1.

The reactor comprises a radio-frequency generator of the type IEVT VGK 200/1 high frequency generator operating at 13.5 MHz and at 300 W maximum power. Reactions were carried out in a stainless steel reactor with the continuous wave plasma as opposed to pulsed plasma. The stainless steel reactor had an inner diameter of 200 mm and a height of 284 mm. Gases were supplied to the reactor through conventional mass flow controllers. The pressure in the reactor was measured by a pressure sensor and a high vacuum sensor. The plasma in the reactor was inductively coupled through a silica window by a five-turn planar coil of 3 mm diameter and the power dissipated in the reactor was 30 W. Prior to reactions in a low temperature plasma, the system (all stainless steel) was evacuated to 10⁻³ Pa. After the flow and pressure stabilized, the plasma was initiated. Reaction products exiting the plasma reactor were trapped in a 77 K cold trap.

The apparatus and methods for producing plasma were the same as described by Klampfer et al. (Acta Chim. Slov. 2003, 50: 29-41).

The experimental setup is shown in Figure 1. The setup includes the supply of the three gases 1, a plasma reactor or plasma cell 2, a rack 3 for supporting the polymeric mesh, a gas extraction system 4, a filter for gas purification prior to release into the environment 5, a radio-frequency generator 6, and a coil of an electrically conducting material 7, such as copper.

The plasma polymerization was performed in a plasma reactor -a modified GEC cell made of stainless steel - using a plasma generated from argon, ammonia and hexane gas. The following gas flows were applied: hexane 0.65 ml/min, ammonia from 0.5 to 6.0 ml/min and argon from 2.0 to 8.0 ml/min (standard conditions, T = 0 °C, 1.01 bar). During polymerization the pressure in the reactor was 0.4 mbar.

A sample of PET mesh of 100 mm x 100 mm was placed in the plasma reactor 2 and then the plasma reactor was evacuated by the extraction system 4. The extracted air was released into the environment after being filtered by filter 5. When the pressure in the plasma reactor fell below 0.001 mbar, argon gas with a flow rate of 8 ml/min (standard conditions) was introduced into the system using a mass flow controller. The radio-frequency generator was 6 connected with the flat five-turn copper coil 7 placed outside the plasma reactor (on a silica window of the plasma reactor) and activated. The substrate was first treated with argon plasma in order to ensure better adhesion of the plasma polymer to the substrate. The plasma treatment was started with an electric spark and after three minutes hexane and ammonia were introduced. The polymerization process lasted between 30 to 300 minutes.

### EXAMPLE 2: EXAMINATION OF MODIFIED POLYMERIC MATERIAL

The plasma polymerization method described in Example 1 was used to prepare a polymer coating on the surface of a polyethylene terephthalate (PET) mesh. A polymer coating containing nitrogen functional groups was thereby created. The effectiveness of the deposition/nitrogen content was evaluated with the Kjeldahl method, and the number of freely accessible amine groups was determined with infrared (IR) and ultraviolet (UV) spectroscopy and potentiometric titration.

### 1. Kjeldahl method

The relative amount of nitrogen in the plasma polymerized coating was determined using the standard Kjeldahl method. Table 1 shows the results of the nitrogen content on the untreated PET mesh and the PET mesh treated with plasma polymerization with the argon, hexane and ammonia gas mixture.

**Table 1: Nitrogen content using the Kieldahl method**

| Sample | Sample volume (mL) | Sample mass (g) | Ni (mmol/kg) |
|---|---|---|---|
| PET-N | 250 | 0.5133 | 15.48 |
| PET-P | 250 | 0.5174 | 38.62 |

| | | | |
|---|---|---|---|
| PET-N: untreated sample; PET-P: plasma polymerized sample; Ni: nitrogen content of the sample | | | |

The results of the Kjeldahl analysis show an increased presence of nitrogen (%) in the sample that was plasma polymerized. The PET-P sample shows a 150% increased presence of nitrogen compared to the untreated sample (PET-N). This demonstrates that plasma polymerization is an efficient method for the introduction of functional groups containing nitrogen groups.

### 2. Infrared (IR) spectroscopy

Figure 2 shows a comparison between the spectra of the untreated and plasma polymerized samples. It can be seen that in the case of the plasma polymerized sample the peaks appear in the areas 3500-3300 cm⁻¹, 1600 cm⁻¹, 1100 cm⁻¹ and between 900 and 700 cm⁻¹. Such peaks are typical for the -NH₂ group. The presence of amine groups on the plasma polymerized sample is thereby confirmed.

Longitudinal vibration of the N-H group shows absorption peaks at 3250-3500 cm⁻¹, depending on the number of hydrogen atoms and the presence or absence of hydrogen bonds. In a gaseous state or as a diluted solution in an inert solvent the primary amines show two peaks, namely at 3400 in 3500 cm⁻¹ (symmetric and asymmetric vibration). These two peaks move towards lower wave numbers to approximately 3300 and 3370 cm⁻¹ in the liquid or solid sample due to hydrogen bonds between amines. Secondary amines show only one peak in this area. The amines' absorption peaks are usually steeper than those of the hydroxyl group since the hydrogen atoms in amines are less acidic and form weaker hydrogen bonds. Clearly visible peaks of transverse vibration of the N-H groups whose position depends on the structure of the amine are usually found in the area around 1600 cm⁻¹. Ammonium ions (in the amine salts) are significantly more acidic than amines; therefore the hydrogen atoms produce stronger hydrogen bonds. The peaks of the longitudinal N-H vibrations appear at lower frequencies and are therefore much broadened. They can be found in the area between 2000 and 3100 cm⁻¹ and are usually composed of several peaks.

The presence of amine groups on the plasma polymerized sample is thereby confirmed.

### 3. Ultraviolet (UV) spectroscopy

C.I. Acid Orange 7 dye is a dye that binds to amino functional groups. These functional groups present access points for efficient dye binding, i.e. they create an ionic bond between the sulfone groups (SO₃⁻) of the dye and the amine groups (NH₃⁺) of the material in a 1:1 ratio. The absorption results of the C.I. Acid Orange 7 dye on the untreated PET mesh and plasma polymerized PET mesh are presented in Table 2.

**Table 2: Concentration of the C.I. Acid Orange 7 dye on differently treated PET meshes**

| Sample | Dye concentration on the sample (mmol/kg) | Dye concentration on the sample (g/g) | The difference between the initial and final absorbance |
|---|---|---|---|
| PET-N | 0.00368 | 1.3 E-06 | 0.02885 |
| PET-P | 0.16607 | 5.8 E-05 | 0.09526 |

| | | | |
|---|---|---|---|
| PET-N: untreated sample; PET-P: plasma polymerized sample | | | |

The untreated sample (PET-N) absorbed a very small amount (1.3 E-06) of the C.I. Acid Orange 7 dye. The plasma polymerized sample absorbed a significantly greater amount (5.8 E-05) of the C.I. Acid Orange 7 dye. The results show that plasma polymerization produced a film with nitrogen functional groups on the surface of the PET material. The increased dye concentration on the plasma polymerized sample confirms the efficiency of the plasma polymerization treatment.

### 4. Potentiometric titration

Table 3 shows the results of the quantity of accessible charged functional groups for the untreated PET mesh and the plasma polymerized PET mesh. To exclude the presence of ions that were not chemically bonded to the surface of the material but could have led to "misleading" results, titration measurements were performed on a PET sample that had been previously demineralized for comparison.

**Table 3: The amount of charged functional groups in the untreated PET material and the plasma polymerized material**

| Sample | Amount of charged functional groups (mmol/kg) | |
|---|---|---|
| | Positively charged groups | Negatively charged groups |
| PET-N | 13.5 | - |
| PET-D-N | 12.7 | - |
| PET_P | 19.4 | - |

| | | |
|---|---|---|
| N-untreated; P-plasma treated; D-demineralized | | |

In all the PET samples, regardless of their treatment, there were no negatively charged functional groups, which is to be expected with regard to the chemical structure of the starting polymer. The untreated (PET-N) as well as the untreated and demineralized PET samples (PET-D-N) contained approximately 13 mmol/kg of positively charged groups, which runs contrary to the fact that polyethylene terephthalate has no positively charged functional groups. This could be explained by the effect of the dyes and aids used in the PET mesh dying process (it is of a green color). The PET material treated with plasma, comprising of argon, hexane and ammonia, contained 19.4 mmol/kg of positively charged functional groups. Compared to the untreated sample this 33% increase (6.4 mmol/kg) is the result of the amine groups (-NH₃⁺, -NH₂⁺, -NH⁺) present on the surface of the material. The increased amount of positively charged functional groups on the surface of the plasma polymerized sample confirms the efficiency of the plasma polymerization treatment.

### EXAMPLE 3: ANTIMICROBIAL ACTIVITY TESTING

Plasma polymerization-treated PET meshes and non-treated PET meshes were investigated for their antimicrobial activity, using the ASTM E2149-10 test method.

In short, the ASTM E2149-10 test method determines the antimicrobial activity of the treated specimen by shaking samples of surface bound materials in a concentrated bacterial suspension for one hour contact time. The suspension is serially diluted both before and after contact and cultured. The number of viable organisms from the suspension is determined and percent reduction is calculated by comparing retrievals from appropriate controls.

The results of the testing are shown in Table 4. The test results are shown as a bacterial reduction R (%).

**Table 4: The reduction level R (%) of the untreated and plasma polymerized PET meshes on the bacteria most commonly found in wounds**

| Sample | Reduction level *R* (%) for bacterial cultures | | |
|---|---|---|---|
| | *Staphylococcus aureus* (gram positive) | *Escherichia coli* (gram negative) | *Enterococcus faecalis* (gram positive) |
| PET-N | 75% | No reduction | No reduction |
| PET-P | 100% | 99.96% | 93.7% |

| | | | |
|---|---|---|---|
| PET-N: untreated sample; PET-P: plasma polymerized sample | | | |

The results of testing antimicrobial activities show that the untreated samples did not have antimicrobial properties. The results of testing for *Escherichia coli* in *Enterococcus faecalis* do not show a reduction, while the *Staphylococcus aureus* reduction amounted to 75%. Inhibition of specific bacteria is not only a consequence of the amino groups present, but can also be a result of the material's modified (improved) hydrophilic properties. Bacteria also differ from one another in terms of their form and dimensions. *S*. *aureus* was most efficiently absorbed in the untreated test material, which consequently shows a moderate 75% reduction in the test material.

The PET mesh that was plasma polymerized using argon, hexane and ammonia gases showed an increased reduction level. The efficiency of the treatment is shown in the polymer film that was created on the surface of the PET mesh and contained amine functional groups, which cause inhibition of pathogenic microorganisms.

The results of the antimicrobial activity of the plasma polymerized PET mesh show an efficient reduction (100%) in the gram positive bacterium *S*. *aureus.* The plasma polymerized PET mesh showed a successful reduction (99.96%) of the gram negative bacterium *Escherichia coli.*

The treated PET material also showed a successful reduction (93.7%) in the gram positive bacterium *Enterococcus faecalis.* This is a gram positive bacterium that is the third most common wound contaminant, after *E*. *coli* and *S*. *aureus.*

## Claims

1. A coated polymeric substrate for use as an antimicrobial agent, said coated polymeric substrate being coated with a layer of a polymer material produced by plasma polymerization from gas comprising at least carbon, hydrogen and nitrogen atoms; wherein said layer of a polymer material contains less than 0.01%(wt) of silver, based on the total weight of said layer.

2. Coated polymeric substrate of claim 1, wherein said gas comprising at least carbon, hydrogen and nitrogen atoms comprises a gas selected from the group consisting of: a mixture of ammonia and a hydrocarbon compound; a mixture of ammonia and hexane; a mixture of hydrazine and hexane; amino methane; a mixture of N₂ and a hydrocarbon compound; and a mixture of N₂, H₂ and a hydrocarbon compound.

3. Coated polymeric substrate of any one of the preceding claims, wherein said gas comprising at least carbon, hydrogen and nitrogen comprises at least one molecular species comprising nitrogen, hydrogen and carbon atoms.

4. Coated polymeric substrate of any one of the preceding claims, wherein said gas comprising at least carbon, hydrogen and nitrogen further comprises argon atoms.

5. Coated polymeric substrate of any one of the preceding claims, wherein said coated polymeric substrate is a polymeric mesh.

6. Coated polymeric substrate of any one of the preceding claims, wherein said coated polymeric substrate comprises polyethylene terephthalate (PET), polyolefin, polypropylene (PP), polyamide (PA) or polyurethane (PU).

7. Coated polymeric substrate of any one of the preceding claims, wherein said plasma polymerization is effected by application of an electromagnetic field.

8. Antimicrobial product comprising an antimicrobial agent,
wherein said antimicrobial agent is a coated polymeric substrate as defined in any one of claims 1-7.

9. Antimicrobial product of claim 8, wherein said antimicrobial product is a multilayered product, and said polymeric substance serves as a layer in said multilayered product.

10. Antimicrobial product of any one of claims 8-9, wherein said coated polymeric substance, during use, is in direct contact with the skin of a patient or of a wearer.

11. Antimicrobial product of any one of claims 8-10, wherein said antimicrobial product is a wound dressing, a band-aid, a feminine hygiene article, or a diaper.

12. Use of the coated polymeric substrate of any one of claims 1-7 as an antimicrobial agent.

13. Method of increasing the antimicrobial activity of a polymeric substrate, said method comprising coating said polymeric substrate with a layer of a polymer material produced by plasma polymerization from gas comprising at least carbon atoms, hydrogen atoms and nitrogen atoms; wherein said layer of a polymer material contains less than 0.01%(wt) of silver, based on the total weight of said layer.
